# EUROPEAN PATENT SPECIFICATION

(11) **EP 0 522 072 B1**
(45) Date of publication and mention of the grant of the patent: **17.11.1994**
(21) Application number: 91907782.6
(22) Date of filing: 28.03.1991
(51) Int. Cl.: B60D 1/54

(54) **ARRANGEMENT ON A VEHICLE**
FAHRZEUGANHÄNGERKUPPLUNG
DISPOSITIF DE REMORQUAGE POUR VEHICULE

(30) Priority: 30.03.1990 SE 9001167
(43) Date of publication of application: 13.01.1993
(73) Proprietor: JSM-KONSULT HB, S-690 50 Vretstorp (SE)
(72) Inventor: ANDERSSON, Stefan, S-690 50 Vretstorp (SE)
(74) Representative: Rackette, Karl, Dipl.-Phys. Dr.-Ing
(86) International application number: SE9100237
(87) International publication number: WO9115374

(56) References cited:
- EP-A- 0 288 366
- GB-A- 2 207 103
- SE-B- 390 144

## Description

The present invention relates to an arrangement on a vehicle to permit the detachable attachment of vehicle trailers or other objects to the vehicle in question in the area of the rear lower part of the vehicle via said towing arrangement, which comprises a pivotally mounted towing coupling arm with a coupling device supported at a certain distance from the pivoting mounting of the arm with the pivot shaft of said pivoting mounting being inclined in a direction away from the lower end of the shaft rearwards and upwards when the towing arrangement is attached to the vehicle as disclosed for example in the document US-A-4 078 827.

In the case of motor vehicles, and in particular vehicles of the kind which exhibit high clearance over the ground between the wheels of the vehicle, such as the King-Cab type, etc., it is not desirable to reduce the height of the clearance when it is wished to attach a vehicle trailer of the desired kind to the rear lower part of the vehicle in question with the help of a trailer coupling arrangement, at the same time as which it is wished to achieve a towing hitch which acts at an appropriate height in relation to the vehicle and the trailer, etc. There are certainly trailer coupling arrangements available of a kind such that they are capable of being removed from the motor vehicle on those occasions when the need for the detachable coupling of the motor vehicle to a trailer or caravan, etc., does not arise, and when it is wished to be able to use the motor vehicle with its full ground clearance without the obstruction of any towing coupling arrangement which projects outwards and downwards at the rear lower part of the motor vehicle. However, in order to be sure of having the towing hitch with them at all times, many people are not prepared to disconnect it from the vehicle, with the aforementioned problems as a result.

There are also towing hitches which are capable of being pivoted about a supporting pivot axle extending in the longitudinal sense of the vehicle or a supporting pivot axle extending perpendicularly in relation to the longitudinal sense of the vehicle, although these previously disclosed towing hitches do not exhibit the ability to increase the clearance of the vehicle in relation to the towing hitch, but are instead intended to allow the towing hitch to be moved out of the way, so that they do not project unnecessarily in a direction rearwards from the vehicle and in so doing risk unnecessary damage in the event of an impact at that point.

The principal object of the present invention is thus, in the first place, to make available a towing arrangement of the kind indicated, which, amongst other things, solves the above said problem simply and effectively, and yet without the arrangement being complicated and cost-intensive.

Said object is achieved by means of an arrangement in accordance with the present invention, which is characterized by the features disclosed in the characterising portion of claim 1.

The invention is described below as a preferred illustrative embodiment, in conjunction with which reference is made to the drawings, in which:

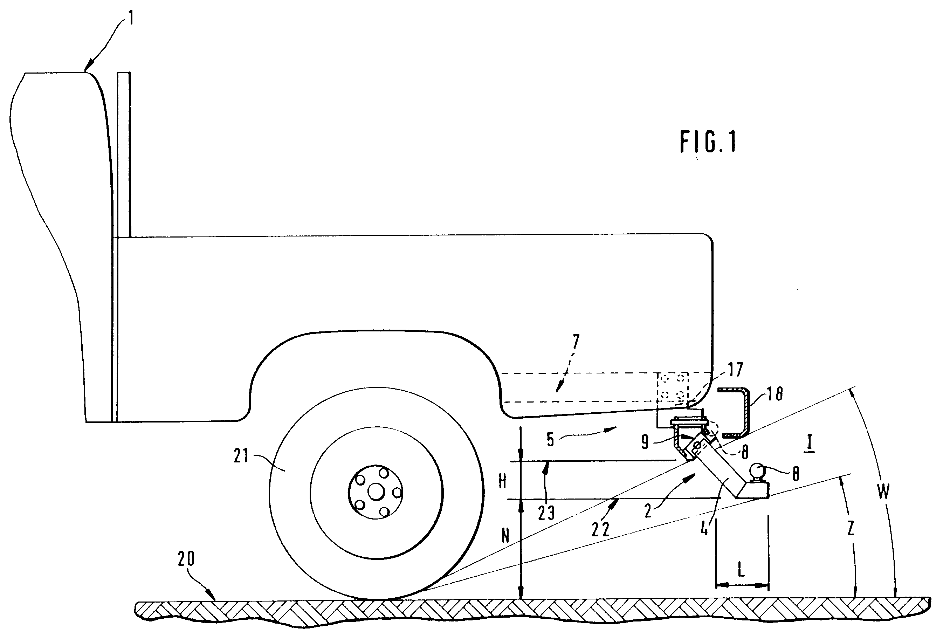

Fig. 1 shows a side view of a rear part of a motor vehicle which has a towing arrangement in accordance with the invention fitted and illustrated in the extended position ready for coupling to take place;
Fig. 2 shows a detailed sectional view of the arrangement;
Fig. 3 shows a perspective view of the towing arrangement not installed on a vehicle and illustrated pivoted into different positions;

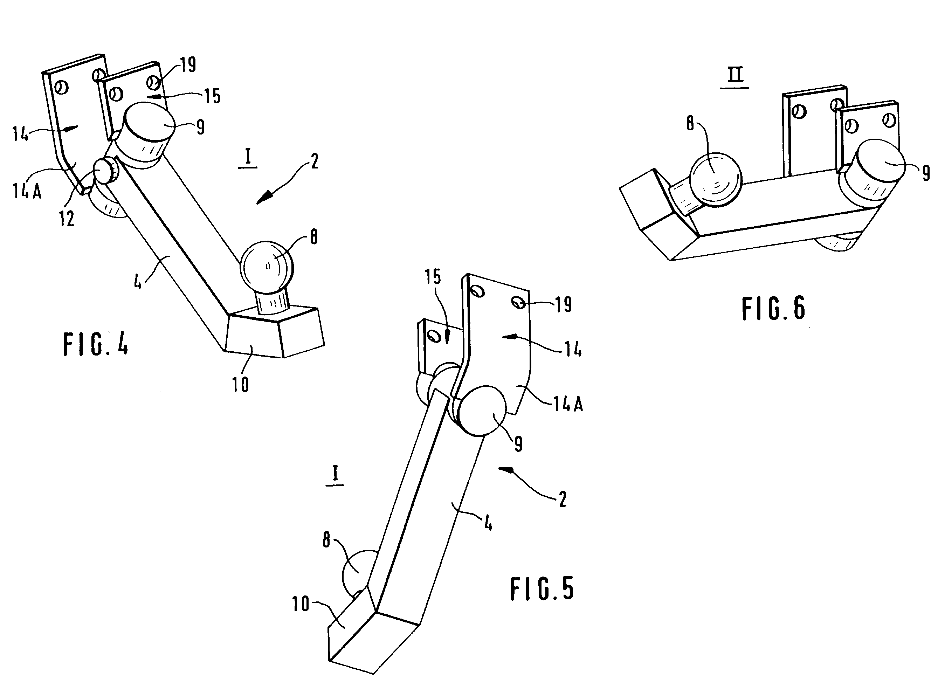

Fig. 4 shows a perspective view of the towing arrangement not installed on a vehicle and illustrated in the extended position ready for coupling to take place;
Fig. 5 shows a perspective view of the towing arrangement not installed on a vehicle and illustrated in the extended position ready for coupling to take place viewed from below; and
Fig. 6 shows a perspective view of the towing arrangement in the upward-pivoted stowage position.

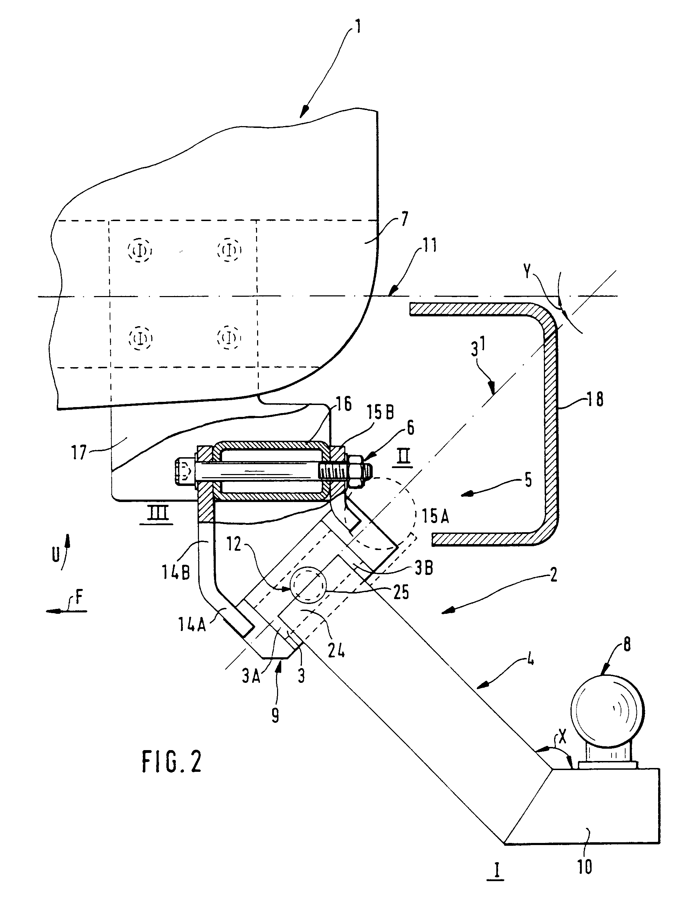

A towing arrangement 2 in accordance with the present invention intended for the detachable attachment of trailers, caravans, vehicle trailers of other kinds or objects such as bicycle racks, for example, to a motor vehicle 1 comprises an inclined pivot shaft 3, about which an intended towing coupling arm 4 is so arranged as to be capable of being caused to pivot. The arrangement 2, which is capable of attachment for example to a vehicle 1 in the area of the rear lower part 5 of the vehicle, for example by means of bolts 6 which are attached either directly or indirectly to the standard chassis rails 7 of the vehicle, comprises a coupling device 8, for example a ball, which is supported at a certain distance from the pivoting bearing 9 of the arm. Said coupling device 8 is supported so that it is accessible from above when the arrangement 2 is being held in the position I ready for coupling to take place, as shown in Fig. 2, for example, with the coupling ball 8, etc., supported on the outer free end 10 of a coupling arm 4. Said arm 4 appropriately extends at an angle X, such that the outer end part 10 of the am 4 extends essentially parallel with a line 11 extending in the longitudinal direction of the vehicle, for example along an existing longitudinal chassis rail 7 of the vehicle, running down the centre of the vehicle.

The pivot shaft 3 of said pivoting bearing 9 is preferably inclined rearwards and upwards, viewed in a direction away from the lower end 3A of the shaft, such that an imaginary prolongation 3¹ of said shaft 3 preferably subtends an acute angle Y with a line 11 extending in the longitudinal direction of the vehicle.

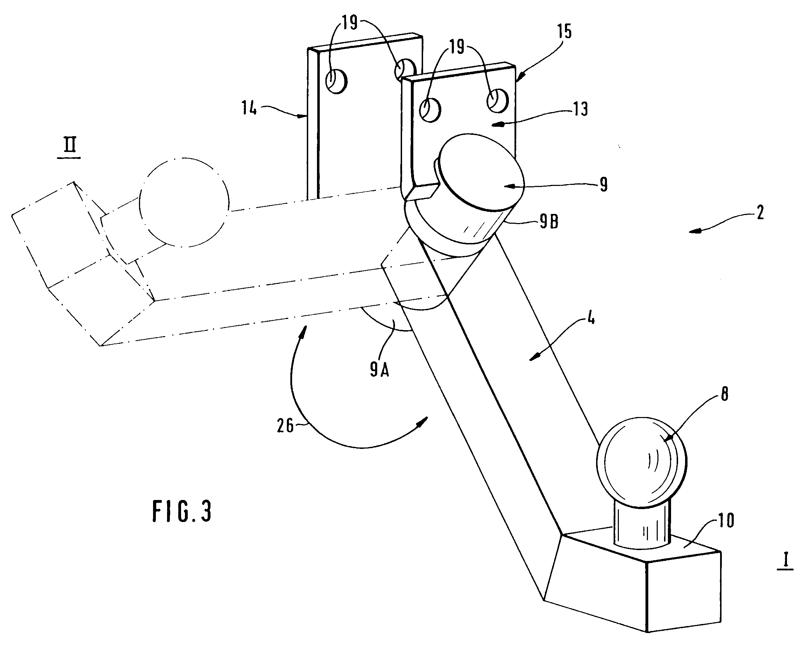

The function and the nature of the towing arrangement 2 are such that, for example when said towing coupling arm 4 is actuated manually causing it to pivot about the inclined pivot shaft 3, the arm 4 and its associated coupling device 8 are caused to swing up into an intended stowage position II, as indicated by the broken lines in Figs. 2 and 3, with the arm 4 extending across the longitudinal direction of the vehicle, or the arm 4 and its associated coupling device 8 are caused to swing down into a desired intended towing position I ready for coupling to take place, with the arm 4 extending obliquely downwards and rearwards from the rear end 5 of the vehicle in the area of the central rear part of the vehicle.

The arrangement 2 should suitably be provided with a catch 12 of an appropriate kind, with which the arm 4 can interact and be locked in a desired set position, for example the two said positions I and II. Said catch 12, which can be so arranged as to act upon the pivot shaft 3, and as to be capable of manual actuation, may consist of a pin or a ball, for example, so arranged, when in the intended locking position, as to interact with the associated bearing 9 for the shaft, in so doing retaining the arm 4 in the desired positions I and II. Said catch 12 may be spring actuated and arranged either so as to operate under the effect of spring force, or so as to be released with the assistance of the spring force.

The mounting brackets 13 for the towing coupling arm 4 are supported by the bearing 9 at its two ends 9A, 9B, and the brackets preferably consist of pairs of uprights 14, 15 which are so arranged as to be capable of detachable attachment to a vehicle chassis rail, for example to a cross-rail 16 which is supported by and is attached to a vehicle box girder 7 with the help of mounting plates 17 beneath the vehicle 1 and inboard of the rear bumper bar 18 of the vehicle.

The two mounting uprights 14, 15 may consist of pieces of flat angled plate which exhibit bolt fixing holes 19 at the top, such that the arrangement 2 is secured rigidly to a vehicle 1. The mounting uprights 14, 15 can extend from a bearing 9 of the kind in question in a position III fixed to a vehicle 1 obliquely upwards U and forwards F in the longitudinal and vertical directions of the vehicle, with various parts 14A, 14B; 15A, 15 B of the upright, and the fixing bolts 6 can be so arranged as to interact with upward-facing parts 14B, 15B of the uprights for the purpose of fixing the arrangement 2 with bolts to a rail 16 of the kind referred to above.

The function of the arrangement 2 should have become apparent from the foregoing, although it can be stated briefly that the arm can be locked in its rearward-swung position I ready for coupling to take place by means of the catch 12 and prevented from pivoting away from said position I unintentionally. The arm 4 with its associated coupling device 8, when in said position I, is then at a suitable distance N above the ground 20, with a free angle Z of about 15° viewed from the rear wheel 21 of the vehicle which is in contact with the ground 20. The lower part 10 of the arm is then at a certain distance H from the bearing 9 when viewed in the vertical sense. In the upward pivoted position II, with the arm 4 angled to the side beneath the vehicle 1 inboard of the bumper bar 18, the outer part of the arm, and thus also its lower end 10, are at the same level 23 as the bearing 9 with a free angle W amounting in total to ca. 25° when viewed as stated above.

It must also be noted that said simple measure of causing the arm 4 to pivot achieves not only the raising of the arm 4 and the coupling ball 8, etc., over the distance H to the intended desired adjustable levels 22 or 23, retracted II out of the way close to the underneath of the vehicle or lowered I into a position at the correct level for the coupling and towing of a load, or alternatively for detachable attachment to intended objects, for example a bicycle rack of the previously disclosed kind which is attached to a towing coupling ball 8, but also its extension beyond the rear end part 5 of the vehicle and its retraction within the rear boundary line of the vehicle, for a distance L, by which distance L the effective length of the vehicle can be varied in a direction from the towing hitch mounting depending on the positions I or II to which the towing hook has been caused to pivot.

The arrangement 2 is equally suitable for fitment as original equipment to new vehicles, and for fitment as an accessory to vehicles which are already in service.

Pivoting of the arm 4 about the shaft 3, which is preferably securely attached to both end parts 9A, 9B of the bearing, to which the mounting uprights 14, 15 are securely attached, means, for example, that the bearing hub part 24 of the arm, which exhibits a shaft accommodating hole 25, is caused to pivot together with the associated arm 4 and the coupling ball 8, etc., about the shaft 3 in the direction of the arrow 26 after releasing the catch 12.

## Claims

1. Towing arrangement (2) on a vehicle (1) to permit the detachable attachment of vehicle trailers or other objects to the vehicle (1) in question in the area of the rear lower part (5) of the vehicle via said towing arrangement (2), which comprises a pivotally mounted towing coupling arm (4) with a coupling device (8) supported at a certain distance from the pivoting mounting (9) of the arm with the pivot shaft (3) of said pivoting mounting (9) being inclined in a direction away from the lower end (3A) of the shaft rearwards and upwards when the towing arrangement (2) is attached to the vehicle (1), **characterized in that** the actuation of said towing coupling arm (4) causing it to pivot about the pivot shaft (3) causes the arm (4) to swing up or to swing down into the desired stowage position (II) or the position (I) ready for coupling to take place by the pivot shaft (3) being so inclined that an imaginary prolongation (3¹) of said pivot shaft (3) subtends an acute angle (Y) with a line (11) extending in the longitudinal direction of the vehicle, and an angled (X) outer free end (10) of the towing coupling arm (4) protrudes perpendicularly from said pivot shaft (3) of the pivoting mounting (9) and extends essentially parallel with a line (11) extending in the longitudinal direction of the vehicle, such that the actuation of said towing coupling arm (4) causing it to pivot about the inclined pivot shaft (3) causes the arm (4) and its associated coupling device (8) to swing up into a desired stowage position (II) (as indicated by the broken lines in Figs. 2 and 3) with the arm (4) extending across the longitudinal direction of the vehicle, or causes the arm (4) and its associated coupling device (8) to swing down into an intended towing position (I) ready for coupling to take place, with the arm (4) extending obliquely downwards and rearwards from the rear end (5) of the vehicle in the area of the central rear part of the vehicle, in conjunction with which the outer part of the arm, and thus also its lower end (10), in the upward pivoted position (II) with the arm (4) angled to the side beneath the vehicle (1) inboard of the rear bumper bar (19), are at the same level (23) as the bearing (9).

2. Towing arrangement in accordance with Patent Claim 1, **characterized in that** the towing coupling arm (4) extends at an angle (X), in conjunction with which the coupling device (8) is supported so that it is accessible from above in a position on the arm (4) ready for coupling to take place at the outer free end (10) of the arm.

3. Towing arrangement in accordance with Patent Claim 2, **characterized in that** the coupling device (8) is in the form of a ball.

4. Towing arrangement in accordance with any of the foregoing Patent Claims, **characterized in that** a catch (12) is capable of interacting with the towing arrangement (2) for the purpose of locking the arm (4) in the desired set position (I; II).

5. Towing arrangement in accordance with Patent Claim 4, **characterized in that** the catch (12) is so arranged as to act upon the pivot shaft (3).

6. Towing arrangement in accordance with Patent Claim 5, **characterized in that** the catch (12), which is capable of manual action and which, for example, is in the form of a pin or a ball, is so arranged when in the locked position as to retain the arm (4) and to act between the shaft and an arm bearing component (24).

7. Towing arrangement in accordance with any of the foregoing Patent Claims, **characterized in that** the mounting brackets (14, 15) for the arm (4) are supported at the respective ends (9A, 9B) of the bearing, and are preferably in the form of uprights (14, 15) capable of attachment to a vehicle chassis rail (7; 16), in conjunction with which the shaft (3) is securely attached to both end parts (9A, 9B) of the bearing, to which the mounting bracket uprights (14, 15) are securely attached.

8. Towing arrangement in accordance with Patent Claim 7, **characterized in that** said mounting bracket uprights (14, 15) are angled in such a way as to extend away from the bearing (9) forwards (F) and upwards (U) with various parts (14A, 14B; 15A, 15B) of the uprights, in conjunction with which, for example, fixing bolts (6) are so arranged as to interact with the upward-facing parts (14B; 15B) of the uprights for the purpose of bolting them securely to a vehicle chassis rail (16) extending across the longitudinal direction of the vehicle.

## Patentansprüche

1. Anhängerkupplung (2) für ein Fahrzeug (1), um eine lösbare Verbindung Von Fahrzeuganhängern oder anderen Gegenständen an das genannte Fahrzeug (1) im Bereich des hinteren unteren Abschnitts (5) des Fahrzeugs über die besagte Anhängerkupplung zu ermöglichen, die einen schwenkbar angeordneten Zugverbindungsarm (4) mit einer Ankopplungseinrichtung (8) aufweist, die in einem gewissen Abstand von der schwenkbar angeordneten Befestigung (9) des Armes gestützt wird, wobei der Schwenkschaft (3) der schwenkbar angeordneten Befestigung (9) in einer Richtung geneigt ist, die weg von dem unteren Ende (3A) des Schaftes rückwärtig und nach oben gerichtet ist, wenn die Anhängerkupplung (2) an dem Fahrzeug (1) befestigt ist, **dadurch gekennzeichnet**, daß die Betätigung des Zugverbindungsarmes (4), die ihn um den Schwenkschaft (3) verschwenkt, bewirkt, daß der Arm (4) nach oben schwinkt oder nach unten schwinkt, respektive in die gewünschte Lagerposition (II) oder in die Position (I), die das Ankoppeln ermöglicht, wobei der Schwenkschaft (3) so geneigt ist, daß eine imaginäre Verlängerung (3¹) des Schwenkschaftes (3) sich in einem spitzen Winkel (Y) gegenüber einer sich in longitudinaler Richtung des Fahrzeugs erstreckenden Linie (11) befindet, daß ein gewinkeltes (X) äußeres freies Ende (10) des Zugverbindungsarmes (4) rechtwinklig von dem Schwenkschaft (3) der schwenkbar angeordneten Befestigung (9) wegsteht und sich im wesentlichen parallel zu einer in longitudinaler Richtung des Fahrzeugs verlaufenden Linie (11) erstreckt, so daß die Betätigung des Zugverbindungsarms (4), die ihn um den genannten Schwenkschaft (3) verschwenkt, bewirkt, daß der Arm (4) und die zugeordnete Ankopplungseinrichtung (8) nach oben in eine gewünschte Lagerposition (II) (gestrichelte Linien in Fig. 2 und 3) schwinkt, wobei der Arm (4) sich quer zur longitudinalen Richtung des Fahrzeugs erstreckt, oder die den Arm (4) und die zugeordnete Ankopplungseinrichtung (8) nach unten in die vorgesehene Zugposition (I) verschwenkt, um das Ankoppeln zu ermöglichen, wobei der Arm (4) sich von dem rückwärtigen Ende (5) des Fahrzeugs in dessen rückwärtigen mittigen Teil des Fahrzeugs in einem Winkel nach unten und nach hinten erstreckt, wobei zusammen mit dem äußeren Teil des Armes und somit auch sein unteres Ende (10) in der oberen verschwenkten Position (II) mit dem Arm (4) unterhalb des Fahrzeugs (1) innerhalb der rückwärtigen Stoßstange (19) in der selben Höhe (23) wie das Lager (9) sind.

2. Anhängerkupplung nach Anspruch 1, dadurch gekennzeichnet, daß der Zugverbindungsarm (4) in einem Winkel (X) angeordnet ist und in Verbindung mit dieser Kupplungseinrichtung (8) so gestützt wird, daß sie von oben aus einer Position frei erreichbar ist, um das Ankoppeln am äußeren freien Ende (10) des Armes zu ermöglichen.

3. Anhängerkupplung nach Anspruch 2, dadurch gekennzeichnet, daß die Kupplungseinrichtung (8) die Gestalt einer Kugel hat.

4. Anhängerkupplung nach einem der vorstehenden Ansprüche, dadurch gekennzeichnet, daß ein Fänger (12) fähig ist, mit der Anhängerkupplung (2) zusammenzuwirken, um den Arm (4) in der gewünschten Position (I, II) festzustellen.

5. Anhängerkupplung nach Anspruch 4, dadurch gekennzeichnet, daß der Fänger (12) so angeordnet ist, um auf den Schaft (3) einzuwirken.

6. Anhängerkupplung nach Anspruch 5, dadurch gekennzeichnet, daß der Fänger (12), der zur manuellen Betätigung vorgesehen ist und der zum Beispiel die Gestalt eines Splintes oder einer Kugel aufweist, in der verriegelten Position derart angeordnet ist, um den Arm (4) zurückzuhalten und um zwischen dem Schaft und der den Arm tragenden Elementen (24) zu wirken.

7. Anhängerkupplung nach einem der vorstehenden Ansprüche, dadurch gekennzeichnet, daß die Befestigungsklammern (14, 15) für den Arm (4) an den entsprechenden Enden (9a, 9B) des Lagers getragen werden und vorzugsweise in der Gestalt von Pfosten (14, 15) vorgesehen sind, die dazu geeignet sind, mit einer Schiene der Karosserie des Fahrzeugs (7; 16) verbunden zu werden, wobei der Schaft (3) fest mit beiden Endbereichen (9A, 9B) des Lagers verbunden wird, an dem die Befestigungspfosten (14, 15) sicher befestigt sind.

8. Anhängerkupplung nach Anspruch 7, dadurch gekennzeichnet, daß die Befestigungspfosten (14, 15) in solch einer Weise in einem Winkel angeordnet sind, so daß sie von dem Lager (9) nach vorne (F) und nach oben (U) mit verschiedenen Elementen (14A, 14B; 15, 15B) der Pfosten gerichtet sind, wobei z.B. Befestigungsbolzen (6) so angeordnet sind, um mit den nach oben gerichteten Elementen (14B; 15B) der Pfosten zusammenzuwirken, um diese fest mit der Schiene der Karosserie des Fahrzeugs (16) zu verbinden, die sich quer zur Längsrichtung des Fahrzeuges erstreckt.

## Revendications

1. Dispositif de remorquage (2) sur un véhicule (1) permettant la fixation amovible de remorques ou autres objets sur le véhicule (1) concerné au niveau de la partie inférieure arrière (5) du véhicule par l'intermédiaire d'un dispositif de remorquage (2), qui comprend un bras d'accouplement de remorquage (4) monté de façon pivotante avec un dispositif d'accouplement (8) monté à une certaine distance du montage de pivotement (9) du bras avec l'arbre de pivot (3) de ce montage pivotant (9) incliné dans une direction en éloignement de l'extrémité inférieure (3A) de l'arbre vers l'arrière et vers le haut lorsque le dispositif de remorquage (2) est fixé sur le véhicule (1), caractérisé en ce que l'actionnement du bras de couplage de remorquage (4) le faisant pivoter autour de son arbre de pivotement (3) fait basculer le bras (4) vers le haut ou vers le bas dans la position d'amarrage souhaitée (11) ou la position permettant l'accouplement avec l'arbre de pivot (3) incliné de telle sorte qu'un prolongement imaginaire (3¹) de l'arbre de pivot sous-tend un angle aigu (Y) avec une ligne (11) s'étendant dans la direction longitudinale du véhicule, et une extrémité libre extérieure (10) formant un angle, de l'arbre d'accouplement de remorquage (4) fait saillie perpendiculairement à partir de l'arbre de pivot (3) du montage pivotant (9) et s'étend sensiblement parallèlement à une ligne (11) s étendant dans la direction verticale du véhicule de telle sorte que l'actionnement du bras d'accouplement de remorquage (4) le faisant pivoter autour de l'arbre de pivotement incliné (3) fait basculer vers le haut le bras (4) et son dispositif d'accouplement associé (8) dans une position d'arrimage souhaitée (II) (comme cela est indiqué par les lignes brisées sur les Figures 2 et 3) avec le bras (4) s'étendant dans la direction longitudinale du véhicule ou faisant basculer vers le bas le bras (4) et son dispositif d'accouplement associé (8) dans une position d'arrimage souhaitée (I) permettant l'accouplement, avec le bras (4) s'étendant obliquement vers le bas et vers l'arrière à partir de l'extrémité arrière (5) du véhicule, au niveau de la partie arrière centrale du véhicule, en liaison avec la partie extérieure du bras et par conséquent également son extrémité inférieure (10), dans la position pivotée vers le haut (11) avec le bras (4) formant un angle vers le côté au-dessous du véhicule (1) à l'intérieur de la barre de pare-chocs arrière (19), se situe dans le même niveau (23) que le palier (9).

2. Dispositif de remorquage selon la revendication 1, caractérisé en ce que le bras d'accouplement de remorquage (4) s'étend selon un angle (X), en liaison avec lequel le dispositif d'accouplement (8) est supporté de façon à être accessible par le dessus dans une position sur l'arbre (4) permettant l'accouplement au niveau de l'extrémité libre extérieure (10) du bras.

3. Dispositif de remorquage selon la revendication 2, caractérisé en ce que le dispositif d'accouplement (8) a la forme d'une boule.

4. Dispositif de remorquage selon l'une quelconque des revendications précédentes, caractérisé en ce qu'un cliquet (12) est capable d'interagir avec le dispositif de remorquage (2) pour verrouiller le bras (4) dans la position fixée souhaitée (I, II).

5. Dispositif de remorquage selon la revendication 4, caractérisé en ce que le cliquet (12) est disposé de façon à agir sur l'arbre pivotant (3).

6. Dispositif de remorquage selon la revendication 5, caractérisé en ce que le cliquet (12) qui est apte à une action manuelle et qui, par exemple, a la forme d'un axe ou d'une sphère et, lorsqu'il se trouve dans la position verrouillée, est disposé de manière à retenir le bras (4) et à agir entre l'arbre et un composant de support de bras (24).

7. Dispositif de remorquage selon l'une quelconque des revendications précédentes, caractérisé en ce que les bras de montage (14, 15) pour le bras (4) sont montés aux extrémités respectives (9A, 9B) du palier et sont de préférence sous forme de montants (14, 15) aptes à la fixation sur une glissière de châssis du véhicule (7, 16), en liaison avec laquelle l'arbre (3) est fixé solidement sur les deux parties d'extrémité (9A, 9B) du palier sur lequel sont fixés solidement les montants de support de montage (14, 15).

8. Dispositif de remorquage selon la revendication 7, caractérisé en ce que les montants de support de montage (14, 15) présentent un angle de façon à s'étendre en éloignement du palier (9) vers l'avant (F) et vers le haut (U) avec différentes pièces (14A, 14B, 15A, 15B) des montants en liaison avec lesquels, par exemple, des boulons de fixation (6) sont disposés de façon à interagir avec les parties faisant face vers le haut (14B, 15B) des montants, permettant de les boulonner solidement sur une glissière de châssis de véhicule (16) s'étendant dans la direction longitudinale du véhicule.
